# EUROPEAN PATENT SPECIFICATION

(11) **EP 1 262 379 B1**
(45) Date of publication and mention of the grant of the patent: **14.11.2007**
(21) Application number: 02011517.6
(22) Date of filing: 22.05.2002
(51) Int. Cl.: B60R 21/20, B60R 7/06

(54) **Protection device for automobile seat occupant**
Schutzvorrichtung für einen Fahrzeug-Insassen
Système de protection pour occupant de véhicule automobile

(30) Priority: 30.05.2001 JP 2001162834
(43) Date of publication of application: 04.12.2002
(73) Proprietor: TAKATA CORPORATION, Minato-ku, Tokyo 106-8510 (JP)
(72) Inventor: Abe, Kazuhiro, Minato-ku, Tokyo 106-8510 (JP); Sawa, Tomohiro, Minato-ku, Tokyo 106-8510 (JP)
(74) Representative: Banzer, Hans-Jörg

(56) References cited:
- DE-A- 10 001 658
- DE-A- 10 003 706
- DE-A- 19 842 672
- US-A- 5 443 285
- US-A- 6 039 380

## Description

### [Technical Field of the Invention]

The present invention relates to protection devices for automobile seat occupants. In particular, the present invention relates to a protection device which is used as a leg-protecting device for an automobile seat occupant for protecting the legs of a seat occupant in the case of collision of the automobile, and more specifically, to a protection device for an automobile seat occupant in which an air bag is provided in a glove box.

### [Description of the Related Art]

Hitherto, protection devices for protecting automobile seat occupants when high-speed moving bodies such as automobiles collide have been known, the protection devices including airbags provided inside interior panels (in spaces formed inside the interior panels), gas generators for inflating the airbags, and covers which cover the airbags in a normal state (when the high-speed moving bodies such as automobiles are not in an emergency state such as a collision).

With such a protection device, the airbag is folded and is disposed inside the interior panel in a normal state. The cover is mounted so as to cover the folded body of the airbag.

When the automobile collides, the gas generator starts to eject gas, the ejected gas is supplied into the airbag, and the airbag inflates rapidly. In this case, the cover opens as the airbag inflates, allowing the airbag to expand to the outside of the interior panel and to extend between the interior panel and the seat occupant, thereby protecting the seat occupant.

Such an airbag-type protection device for a seat occupant includes an airbag disposed in the cover of a glove box for protecting legs of the seat occupant such that the airbag inflates in front of the legs.

### [Problems to be Solved by the Invention]

In the above protection device of which the airbag and a gas generator are disposed in the cover of the glove box, the weight of the cover increases; therefore, the force required for opening and closing the cover increases.

From DE 198 42 672 A1 a glove box having an integrated airbag is known. According to this document, feeding of gas into the airbag is accomplished in the vicinity of the hinge axis of a cover flap, housing the airbag. In particular, arrangements are described, in which gas generators for feeding gas into the airbag are arranged to extend in parallel to the hinge axis and are located in the vicinity of the hinge axis in a portion of the cover between the hinge axis and a free end of the cover. Alternatively, the hinge axis may itself be formed by the gas generator. In such arrangements, there are problems regarding the degree of freedom in designing the cover and in positioning the components of the airbag device, in particular the gas generator. Feeding of gas into the airbag can only be accomplished near the hinge axis of the airbag.

Accordingly, an object of the present invention is to provide an improved protection device for an automobile seat occupant, being disposed in a glove box, wherein the glove box or the cover thereof can be easily opened and closed.

### [Means for Solving the Problems]

According to the present invention, this object is achieved by a protection device as defined in claim 1. The dependent claim defines an advantageous and preferred embodiment of the present invention.

A further protection device for an automobile seat occupant, according to the present invention, comprises a glove box having at least a cover rotatable about a supporting shaft and being disposed in front of a seat of an automobile; an air bag disposed in the cover of the glove box; and a gas generator for inflating the air bag. The cover is provided with a protrusion protruding to the opposite side of the cover with respect to the supporting shaft, and the protrusion includes a balance weight.

The protection device for an automobile seat occupant according to the present invention comprises a rotatable glove box or a cover thereof of which the centroid is disposed in the vicinity of the supporting shaft. Therefore, the force required for opening and closing the glove box or the cover thereof is reduced.

According to an embodiment of the present invention, the distance between the centroid of the components, which are rotatable about the supporting shaft, and the axis of the supporting shaft is preferably not greater than 100 mm. With this arrangement; the rotatable components (the glove box when the overall glove box is rotatable, or the cover of the glove box when only the cover is rotatable) can be opened and closed easily.

The protection device for an automobile seat occupant can be appropriately used as a leg-protecting device for an automobile seat occupant.

### [Brief Description of the Drawings]

Fig. 1 is a longitudinal-section view showing a portion in the vicinity of a glove box of an automobile, the glove box being provided with a leg-protecting device for seat occupant as an exemplary protection device for an automobile seat occupant.
Fig. 2 is a longitudinal-sectional view of a protection device for an automobile seat occupant, according to an embodiment of the present invention.
Fig. 3 is a longitudinal-sectional view of a further exemplary protection device for an automobile seat occupant.

### [Description of the Embodiments]

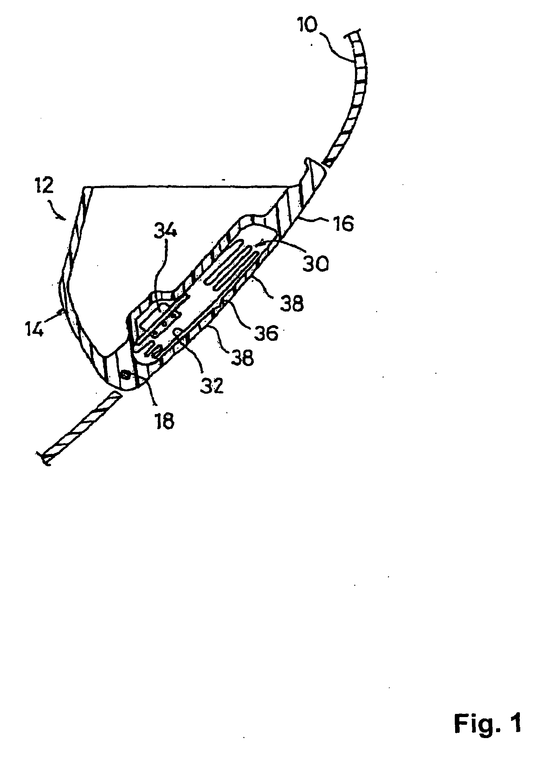

Embodiments according to the present invention are described below with reference to the drawings. Fig. 1 is a longitudinal-sectional view of a portion in the vicinity of a glove box of an automobile, the glove box being provided with a leg-protecting device for a seat occupant as a protection device for an automobile seat occupant.

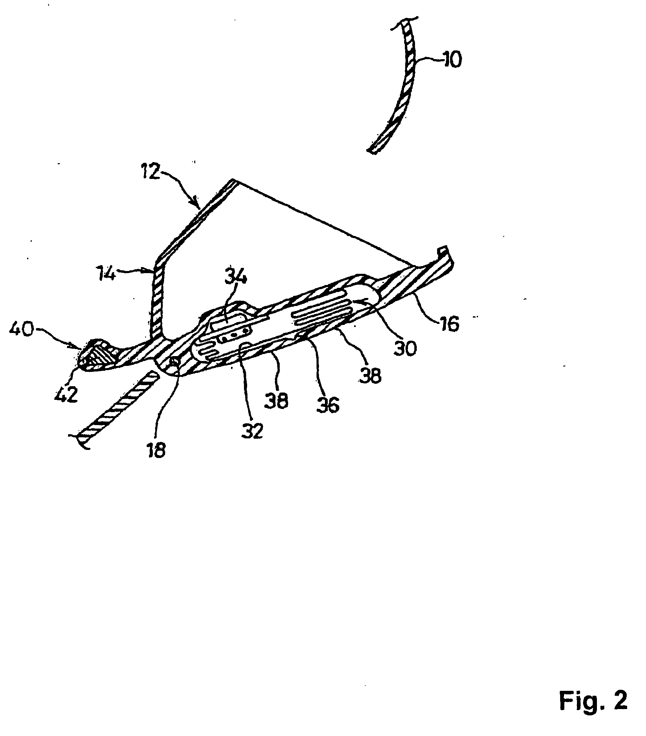

A glove box 12 is mounted to an interior panel (for example, an instrument panel or a lower panel) 10 disposed in front of a seat of an automobile. The glove box 12 includes a receiving part 14 which is an open-top container, and a cover 16 which forms a front face of the deceiving part 14. The glove box 12 is rotatably supported by a hinge shaft 18 as a supporting shaft. The glove box 12 can be positioned either in a closed state shown in Fig. 1 in which the cover 16 is flush with the interior panel 10, or in an open state in which the receiving part 14 and the cover 16 rotate as a unit toward the right in Fig. 1 about the hinge shaft 18. Fig. 2 shows a glove box in an open state, according to an embodiment of the present invention which is described below. The glove box 12 is provided with a latch mechanism and a lock mechanism (neither are shown) for latching and locking the glove box 12 when it is closed. These components have configurations similar to those used for a general glove box.

An airbag device 30 is mounted in the cover 16. The airbag device 30 includes a folded airbag 32, an inflator (gas generator) 34 for inflating the airbag 32, and a flap part 38 made of a synthetic resin that is formed integrally with the cover 16. The flap part 38 includes two flaps that open outward. A tear line 36 extends between the two flaps of the flap part 38. A space for receiving the airbag 32 is formed at the rear side of the flap part 38. A gas inlet of the airbag 32 is fixed at an edge thereof to the rear face of the cover 16 via a flange of the inflator 34.

The inflator 34 is disposed on the hinge shaft 18 side of an intermediate portion of the cover 16 in the radial direction of the locus of the free end of the cover which rotates about the hinge shaft 18, that is, an intermediate portion between the axis of the hinge shaft 18 and the end of the cover 16 opposite to the hinge shaft 18 (the end of the cover 16 at the upper right in Fig. 1). The whole inflator 34 is preferably disposed on the hinge shaft 18 side of the intermediate portion. However, a part of the inflator 34 may be disposed farther from the hinge shaft 18 than the intermediate portion from the hinge shaft 18 as long as a major part of the inflator 34 is disposed closer to the hinge shaft 18 than the intermediate portion to the hinge shaft 18.

In this exemplary protection device for an automobile seat occupant, since the inflator 34, which has a larger mass than the airbag 32, is disposed in the vicinity of the hinge shaft 18, the centroid of the glove box 12 is positioned in the vicinity of the hinge shaft 18. Therefore, the force required for opening and closing the glove box 12 can be reduced, and opening and closing of the glove box 12 can be performed easily.

When the automobile collides, the inflator 34 ejects a gas to inflate the airbag 32. The inflating airbag 32 pushes the flap part 38, and the flap part 38 is thereby broken at the tear line 36 thereof and starts to open. The airbag 32 extends along the front face of the glove box 12 and the interior panel 10 disposed around the glove box 12. The legs of the seat occupant are received by the airbag 32 and are thereby protected.

Fig. 2 is a longitudinal-sectional view showing another an embodiment of the present invention.

According to this embodiment, a protrusion 40 protruding from a glove box 12 to the opposite side of a cover 16 with respect to a hinge shaft 18 is formed integrally with the glove box 12, the protrusion 40 being provided at the protruding free end thereof with a balance weight 42. The other configuration shown in Fig. 2 is the same as that shown in Fig. 1, in which the same reference numerals are used for referring to the same components. Fig. 2 shows the glove box 12 in an open state. The glove box 12 shown in Fig. 2 enters a closed state when it rotates about a hinge shaft 18 such that a cover 16 becomes flush with an interior panel 10.

Since the balance weight 42 is provided, according to the present embodiment, the centroid of the glove box 12 is disposed close to the hinge shaft 18, whereby the glove box 12 can be rotated easily for opening and closing with a small force.

In Fig. 2, an inflator 34 is disposed on the side of the hinge shaft 18 in the same manner as shown in Fig. 1. Therefore, the centroid of the glove box 12 is disposed closer to the hinge shaft 18 than the case shown in Fig. 1, whereby the glove box 12 can be opened and closed with a smaller force.

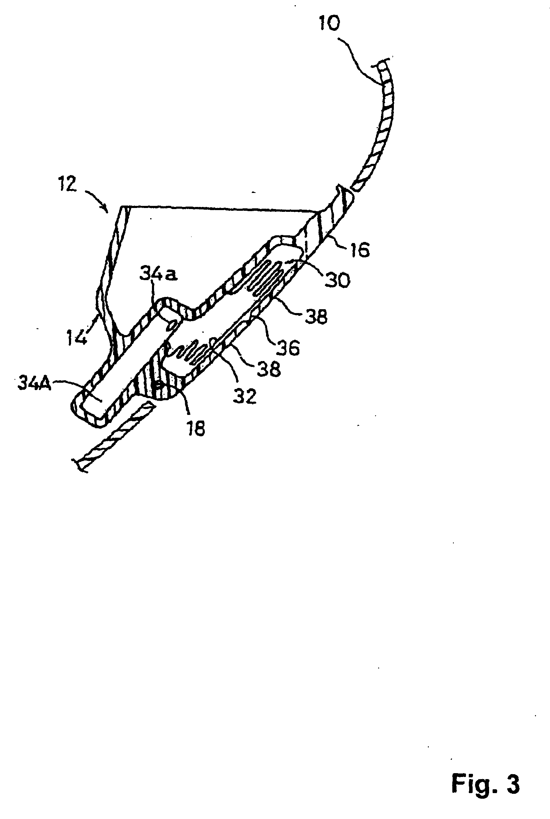

Fig. 3 is a longitudinal-sectional view of a further exemplary protection device for an automobile seat occupant. In this example, a cylindrical inflator 34A is used. The inflator 34A extends crossing the axis of a hinge shaft 18 (in a direction perpendicular to the axis, according to the present embodiment). A gas outlet 34a disposed at an end of the inflator 34A is positioned in a cover 16, whereby gas can be ejected into an airbag 32 through the gas outlet 34a. The other end of the inflator 34A is positioned at the opposite side of the cover 16 with respect to the hinge shaft 18. The other configuration is the same as that shown in Fig. 1. The same reference numerals are used for referring to the same components.

A half of the inflator 34A which has a large mass is disposed on the cover 16 side of the hinge shaft 18 and the other half is positioned at the opposite side of the cover 16 with respect to the hinge shaft 18. Therefore, the centroid of the glove box 12 is disposed close to the hinge shaft 18, whereby the glove box 12 can be easily rotated for opening and closing with a small force.

Although in Fig. 3, a half of the inflator 34A is disposed at the opposite side of the cover 16 with respect to the hinge shaft 18, a major portion of the inflator 34A or the whole inflator 34A may be instead disposed at the opposite side of the cover 16 with respect to the hinge shaft 18. A gas-path member for guiding gas of the inflator 34A into the airbag 32 may be provided.

The receiving part 14 and the cover 16 of the glove box shown in Figs. 1 to 3 are formed integrally with each other. However, the present invention is applicable to a protection device for an automobile seat occupant, of which only the cover 16 moves to open and close.

When the whole glove box 12 rotates about the hinge shaft 18, as shown in Figs. 1 to 3, the distance between the centroid of the glove box 12 and the axis of the hinge shaft 18 is preferably not greater than 100 mm, and more preferably, not greater than 80 mm. In the case of a protection device for an automobile seat occupant in which only the cover rotates about the hinge shaft, the distance between the centroid of the cover and the axis of the hinge shaft 18 is preferably not greater than 100 mm, and more preferably, not greater than 80 mm.

### [Advantages]

As described above, according to the present invention, a glove box which is mounted with an airbag for protecting a seat occupant can be easily opened with a small force.

## Claims

1. A protection device for an automobile seat occupant, comprising:
a glove box (12) having at least a cover (16) rotatable about a supporting shaft (18) and being disposed in front of a seat of an automobile;
an air bag (32) disposed in the cover (16) of the glove box (12); and
a gas generator (34) for inflating the air bag (32),
**characterized in that** the cover (16) is provided with a protrusion (40) protruding to the opposite side of the cover (16) with respect to the supporting shaft (18), and that the protrusion (40) includes a balance weight (42).

2. A protection device for an automobile seat occupant, according to Claim 1, wherein the distance between the centroid of the components, which are rotatable about the supporting shaft (18), and the axis of the supporting shaft (18) is not greater than 100 millimeters.

## Patentansprüche

1. Schutzvorrichtung für einen auf einem Automobilsitz befindlichen Insassen, umfassend:
ein Handschuhfach (12), welches mindestens eine Abdeckung (16) aufweist, welche um eine Haltewelle (18) drehbar ist, und welches vor einem Sitz eines Automobils angeordnet ist;
einen Airbag (32), welcher in der Abdeckung (16) des Handschuhfaches (12) angeordnet ist; und
einen Gasgenerator (34) zum Aufblasen des Airbags (32),
**dadurch gekennzeichnet,**
**dass** die Abdeckung (16) mit einem Vorsprung (40) versehen ist, welcher bezüglich der Haltewelle (18) zu der gegenüberliegenden Seite der Abdeckung (16) hervorragt, und dass der Vorsprung (40) ein Ausgleichsgewicht (42) aufweist.

2. Schutzvorrichtung für einen auf einem Automobilsitz befindlichen Insassen nach Anspruch 1, wobei der Abstand zwischen dem Schwerpunkt der Komponenten, welche um die Haltewelle (18) drehbar sind, und der Achse der Haltewelle (18) nicht größer als 100 Millimeter ist.

## Revendications

1. Un dispositif de protection pour un occupant d'un siège de véhicule automobile, comprenant :
- une boîte à gants (12) ayant au moins un couvercle (16) susceptible de tourner autour d'un arbre support (18) et disposée à l'avant d'un siège d'une automobile ;
- un coussin gonflable de sécurité (32) disposé dans le couvercle (16) de la boîte à gants (12) ; et
- un générateur de gaz (34) pour gonfler le coussin gonflable de sécurité (32),
**caractérisé en ce que** le couvercle (16) est muni d'une saillie (40) faisant saillie vers le côté opposé au couvercle (16) par rapport à l'arbre support (18), et **en ce que** la saillie (40) comprend une masse d'équilibrage (42).

2. Un dispositif de protection pour un occupant d'un siège de véhicule automobile selon la revendication 1, dans lequel la distance entre le centre de gravité des composants, qui sont susceptibles de tourner autour de l'arbre support (18), et l'axe de l'arbre support (18) n'est pas supérieure à 100 millimètres.
